(19) Europäisches Patentamt
European Patent Office
Office européen des brevets

(11) Veröffentlichungsnummer: **0 350 745**
**A2**

(12) **EUROPÄISCHE PATENTANMELDUNG**

(21) Anmeldenummer: 89112080.0

(51) Int. Cl.⁴: **B29C 45/16**

(22) Anmeldetag: 01.07.89

(30) Priorität: 15.07.88 DE 3824071

(43) Veröffentlichungstag der Anmeldung:
17.01.90 Patentblatt 90/03

(84) Benannte Vertragsstaaten:
**DE ES FR IT**

(71) Anmelder: **BAYER AG**

**D-5090 Leverkusen 1 Bayerwerk(DE)**

(72) Erfinder: **Vente, Paul**
**Pregelstrasse 26**
**D-5090 Leverkusen 1(DE)**
Erfinder: **Meussdoerffer, Johann Nikolaus, Dr.**
**Paul-Klee-Strasse 61**
**D-5090 Leverkusen 1(DE)**

(54) Verfahren zur Herstellung gespritzter Formkörper aus Verbundwerkstoffen.

(57) Die vorliegende Erfindung betrifft ein Verfahren zur Herstellung gespritzter Formkörper aus Thermoplasten bzw. Duroplasten und Siliconkautschuk als Verbundwerkstoffteile, wobei der gummielastische Teil aus Siliconkautschuk zuerst gespritzt wird und anschließend der Thermoplast eingespritzt wird.

EP 0 350 745 A2

## Verfahren zur Herstellung gespritzter Formkörper aus Verbundwerkstoffen

Die vorliegende Erfindung betrifft ein Verfahren zur Herstellung von Formkörpern über Spritzgußtechnik, wobei zwei verschiedene Materialien eingesetzt werden, deren unterschiedliche Verarbeitungsbedingungen einerseits keine gemeinsame Verarbeitung möglich erscheinen lassen, andererseits ansonsten keinen oder aber nur einen unbefriedigenden Verbund ergeben. Das Verfahren eignet sich insbesondere für das Herstellen von Verbundteilen aus Thermoplasten und Siliconkautschuk sowie für Verbundteile aus Duroplasten und Siliconkautschuk.

Die Herstellung von Artikeln nach dem Spritzgußverfahren wird vielfach bei Formkörpern praktiziert.

Als Thermoplaste eignen sich insbesondere Polycarbonate, Polyterephthalate, ABS und Polyamid, während als Duroplaste Phenoplast-, Aminoplast- oder Polyesterharzmassen einsetzbar sind. Der Silikonkautschuk kann sowohl ein Festkautschuk als auch ein Flüssigsiliconkautschuk (LSR) sein, wobei entweder die Vernetzung über Peroxide radika lisch erfolgt oder aber durch eine Additionsreaktor von $= SiH$ an $= Si-CH = CH_2$ in Gegenwart von Katalysatoren.

Es ist bekannt, daß die Herstellung von Verbundteilen aus verschiedenen Werkstoffen, z.B. Thermoplasten durch Spritzguß möglich ist, wobei allerdings die jeweils eingesetzten spritzbaren Kunststoffe sich in den Verarbeitungsbedingungen und sonstigen Stoffeigenschaften weitestgehend ähnlich sein mußten; wichtig sind hierbei insbesondere die Verarbeitungstemperaturen, der Forminnendruck, die Vicat-Erweichungstemperatur und das Schrumpfverhalten.

Dieser Stand der Technik hat aber den wesentlichen Nachteil, daß bei Einsatz von zwei spritzbaren Kunststoffen mit unterschiedlichen Reaktionsbedingungen eine Verarbeitung über die an sich wirtschaftliche Spritzgußtechnik nicht mehr möglich war; dies trifft insbesondere dann zu, wenn Thermoplaste oder Duroplaste mit Siliconkautschuk zu einem Verbundwerkstoffteil verarbeitet werden sollen.

So liegt die Vicat-Erweichungstemperatur VST/B des Thermoplasten im allgemeinen unterhalb der üblichen Reaktionstemperatur für den Siliconkautschuk; die Thermoplaste weisen nach dem Spritzguß eine Schwindung (Schrumpf) auf was deren Entformen erst ermöglicht - während Siliconkautschuk bei der Vernetzungstemperatur eine enorme Ausdehnung erfährt und sich deshalb in den Kavitäten "verkrallt" und nicht wie bei Thermoplasten üblich mit einem Kernzug entformbar ist. Weiterhin werden die Thermoplaste über die Spritzgußeinheit durch geheizte Nadelverschlußdüsen eingespritzt, während der Siliconkautschuk gekühlte Nadelverschlußdüsen erfordert; weiterhin ist zu berücksichtigen, daß die Thermoplaste im Gegensatzu zum Silicon kautschuk nicht komprimierbar sind und deshalb sowohl ungewollte Überspritzungen des Siliconkautschuks durch Thermoplaste möglich sind als auch Überspritzungen des Thermoplasten durch Siliconkautschuk, da die Thermoplaste nach dem Spritzen einen Schwund zeigen.

Schließlich ist noch zu berücksichtigen, daß beim Spritzgießen von Siliconkautschuk auf Thermoplaste Probleme bezüglich der Wärmezufuhr für die Vernetzungsreaktion auftreten, als einerseits der Siliconkautschuk ein schlechter Wärmeleiter ist als auch über den Thermoplasten in der Form keine Wärme zugeführt werden kann, da ansonsten das vorgefertigte Thermoplastteil schon wieder verformt wird. Aufgrund der vorgenannten unterschiedlichen Stoffeigenschaften von Thermoplasten und Siliconkautschuk schien es allenfalls möglich, Siliconkautschuk auf den bereits vorgefertigten Thermoplastanteil aufzuspritzen, wobei dann insbesondere die Vicat-Erweichungstemperatur eine kritische Größe darstellte.

Gegenstand der vorliegenden Erfindung ist nun ein Verfahren zur Herstellung gespritzter Formkörper aus Thermoplasten bzw. Duroplasten und Siliconkautschuk als Verbundwerkstoff dadurch gekennzeichnet, daß der Siliconkautschuk zuerst eingespritzt und vulkanisiert wird. Anschließend wird dieser vorgefertigte Artikelteil über eine drehbare Shuttleplatte, welche sowohl zum Silicon-als auch zum Thermoplast-Spritzgußwerkzeug gehört, der Thermoplasteinspritzeinheit zugeführt. Da im allgemeinen eine chemische Bindung zwischen Siliconkautschuk und Thermoplast bzw. Duroplast nicht möglich ist, wurde das Siliconteil über das Werkzeug so ausgebildet, daß eine gezielte partielle Um- bzw. Durchspritzung mit dem Thermo plast erfolgt und damit eine untrennbare Verbindung entsteht.

Besonders interessant ist diese neuartige Technik, wenn es darum geht, in kompliziert geformte Kunststoffverschlüsse, Schraubkappen, Kabeldurchführungen und dergleichen kleine Dichtringe aus Siliconkautschuk einzulegen und zu fixieren; es muß nämlich sichergestellt sein, daß bei Einsatz dieser Verschlüsse ein Verrutschen der Dichtungen ausgeschlossen werden kann, da ansonsten die Funktion nicht mehr gegeben ist.

Ein typisches Beispiel für diese neue Spritzgußtechnik ist die in Fig. 1 skizzierte Abdeckkappe mit einem fest eingearbeiteten Siliconkautschukdichtring. Von technischer und wirtschaftlicher Bedeutung ist dabei, daß möglichst wenig Siliconkautschuk eingesetzt wird, nachdem dieser im Verhältnis zu den anderen Thermoplasten bzw. Duroplasten deutlich teuerer ist. Bisher konnten derartige kompliziert gebaute Teile nicht in einem Arbeitsgang gefertigt werden, sondern waren nur über eine Endmontage der fertigen Einzelteile zu machen, wobei der Verbund z.B. durch Einrasten über entsprechende Hinterschnitte möglich war.

Wie aus Fig. 1 zu ersehen ist, erfolgt die erfindungsgemäße Fertigung der Verbundwerkstoffteile mit Hilfe eines neuartigen Spritzgußwerkzeuges, wozu die folgenden einzelnen Arbeitsabläufe notwendig sind:

1. In das geschlossene Werkzeug wird zunächst mittels eines Kaltkanalnadelverschlusses (ca. 30° bis 60°C) der Siliconkautschuk in die auf Reaktionstemperatur (ca. 150° bis 230°C) vorgeheizte Kavität (1) eingespritzt. Das Werkzeug ist hier so konstruiert, daß das Siliconteil durchbrochene Stege enthält, die anschließend vom Thermoplasten um- und durchspritzt werden können. Dadurch ist gewährleistet, daß der Artikel später optisch gut aussieht, eine maximale Verbindung zum Thermoplasten hergestellt und die Funktion des Siliconkautschukteiles im Verbundartikel voll erfüllt und nicht gestört wird (Einzelheiten "X").

2. Nach dem Einspritzen und Vulkanisieren des Silikonkautschuks wird der Dorn (2) herausgezogen, so daß im Siliconteil die für die Verankerung mit dem Thermoplasten notwendige Durchgriffsmöglichkeit entsteht; das Werkzeug ist nun so konstruiert, daß nach Öffnen der Trennebenen I und II die sogenannte Shuttle-Platte mit dem Werkzeugeinsatz (3) drehbar wird.

3. Nach Drehung der Shuttle-Platte um 90°, wobei der gespritzte Siliconartikel auf dem Werkzeugeinsatz verbleibt und gegebenenfalls noch drucklos nachgetempert werden kann, ist der 1. Zyklus abgeschlossen.

4. Anschließend wird die Shuttle-Platte mit dem Werkzeugeinsatz (3) nochmals um 90° gedreht, wodurch der zuvor gefertigte Siliconartikel unter die Thermoplasteinspritzeinheit gelangt (4); beim Zusammenfahren der Trennebenen I und II wird gleichzeitig mit dem neuen Kerneinsatz (5) und der Thermoplastspritzeinheit eine neue Kavität (6) gebildet, in die nun der Thermoplast eingespritzt werden kann.

5. Da der Thermoplast über einen Heißkanal eingespritzt wurde, verbleibt kein Angußkanal zurück; das Spritzgußteil kann nach Auffahren der Trennebenen I und II mit anschließendem Drehen der Shuttleplatte um 90° entnommen werden und bedarf keiner Nacharbeitung.

Das erfindungsgemäße Verfahren arbeitet hier mit 4 Takten, wobei durchaus auch 3 möglich sind; in der Praxis empfiehlt es sich dabei mit mehreren Kavitäten parallel zu arbeiten, um so den Durchsatz zu vervielfältigen.

Eine schematische Darstellung dieser Arbeitsweise ist in Fig. 2 dargestellt.

## Ansprüche

1. Verfahren zur Herstellung gespritzter Formkörper aus Thermoplasten bzw. Duroplasten und Siliconkautschuk als Verbundwerkstoffteile, dadurch gekennzeichnet, daß der gummielastische Teil aus Siliconkautschuk zuerst gespritzt wird und anschließend der Thermoplast eingespritzt wird.

2. Verfahren nach Anspruch 1, dadurch gekennzeichnet, daß ein Spezialspritzgußwerkzeug gemäß Fig. 1 mit einer drehbaren Shuttleplatte (3) verwendet wird, wodurch der vorgefertigte Teil aus Siliconkautschuk dem Thermoplastspritzkopf zugeführt wird.

3. Verfahren nach Anspruch 1 oder 2, dadurch gekennzeichnet, daß mit den Einsatz der Shuttleplatte (3) und der jeweiligen Spritzkopfeinheit die jeweils notwendige Kavität für das gerade zu spritzende Material gebildet werden kann.

4. Vorrichtung zur Durchführung des Verfahrens gemäß einem der Ansprüche 1 bis 3, dadurch gekennzeichnet, daß die Kavitäten für die verschiedenen zu verarbeitenden Materialien einerseits aus der Shuttleplatte (3) mit dem jeweiligen Kerneinsatz (5) und dem dazugehörenden Spritzkopf gebildet werden.